# EUROPÄISCHE PATENTANMELDUNG

(11) **EP 1 659 655 A2**
(43) Veröffentlichungstag der Anmeldung: **24.05.2006**
(21) Anmeldenummer: 05024259.3
(22) Anmeldetag: 08.11.2005
(51) Int. Cl.: H01M 8/10

(54) **Verfahren zur Herstellung einer Elektroden-Elektrolyt-Struktur und Elektroden-Elektrolyt-Struktur**

(30) Priorität: 23.11.2004 DE 102004058474
(71) Anmelder: Deutsches Zentrum für Luft- und Raumfahrt e.V., 53175 Bonn (DE)
(72) Erfinder: Kaz, Till, 70186 Stuttgart (DE)
(74) Vertreter: Hoeger, Stellrecht & Partner Patentanwälte

(57) **Zusammenfassung**

Es wird ein Verfahren zur Herstellung einer Elektroden-Elektrolyt-Struktur vorgeschlagen, bei der mindestens eine offenporöse Elektrodenlage auf mindestens einen Träger aufgebracht wird und Elektrolytmaterial in fließfähiger Form auf die mindestens eine Elektrodenlage aufgebracht wird.

## Beschreibung

Die Erfindung betrifft ein Verfahren zur Herstellung einer Elektroden-Elektrolyt-Struktur.

Die Erfindung betrifft ferner eine Elektroden-Elektrolyt-Struktur, welche mindestens eine Elektrodenlage und einen elektrolytischen Träger umfaßt.

Die Leistungsfähigkeit von beispielsweise Polymer-Elektrolyt-Brennstoffzellen hängt im wesentlichen von der für die elektrochemische Reaktion zur Verfügung stehenden aktiven Katalysator-Oberfläche ab. Die Katalysator-Oberfläche kann nur aktiv sein, wenn sie an einen Elektrolyten angebunden ist.

Aus dem Stand der Technik ist es bekannt, auf eine elektrolytische Polymermembran eine oder mehrere Elektrodenlagen aufzubringen.

In der nicht-vorveröffentlichten deutschen Anmeldung Nr. 10 2004 047 587.3 vom 23. September 2004 ist ein Verfahren zur Herstellung eines elektrolytischen Katalysatorträgers für elektrochemische Anwendung beschrieben, bei dem auf ein Substrat aus Elektrolytmaterial Partikel des Elektrolytmaterials aufgebracht werden, wobei das Substrat aufgeheizt wird und/oder die aufzubringenden Partikel aufgeheizt werden. Bei einem Ausführungsbeispiel ist es vorgesehen, zur Herstellung einer Elektrodenlage Katalysatormaterial in der Form von Pulverpartikeln aufzubringen, nachdem Elektrolytmaterial-Partikel auf das Substrat aufgebracht wurden.

Der Erfindung liegt die Aufgabe zugrunde, ein Verfahren zur Herstellung einer Elektroden-Elektrolyt-Struktur bereitzustellen, mittels welchem sich eine gute Katalysator-Elektrolyt-Anbindung erreichen läßt.

Diese Aufgabe wird erfindungsgemäß dadurch gelöst, daß mindestens eine offenporöse Elektrodenlage auf mindestens einen Träger aufgebracht wird und Elektrolytmaterial in fließfähiger Form auf die mindestens eine Elektrodenlage aufgebracht wird.

Die mindestens eine Elektrodenlage ist eine elektrochemisch aktive Lage, das heißt eine bezüglich elektrochemischen Reaktionen reaktive Lage. Sie umfaßt Katalysatormaterial. Bei der erfindungsgemäßen Lösung wird zuerst mindestens eine solche Elektrodenlage hergestellt und dann Elektrolytmaterial in fließförmiger Form aufgebracht. Dadurch kann Elektrolytmaterial die Elektrodenlage infiltrieren. Dies bewirkt eine gute Anbindung zwischen dem Katalysatormaterial der mindestens einen Elektrodenlage und dem Elektrolytmaterial.

Bei der erfindungsgemäßen Lösung wird die mindestens eine Elektrodenlage gewissermaßen von "hinten" mit fließfähigem Elektrolytmaterial infiltriert. Es entsteht dadurch eine dreidimensionale Anbindung des Elektrolytmaterials an das Katalysatormaterial der mindestens einen Elektrodenlage.

Mittels des erfindungsgemäßen Verfahrens läßt sich die mindestens eine Elektrodenlage in einen elektrolytischen Träger einbetten. Dadurch wird neben den vorteilhaften elektrochemischen Eigenschaften eine Fluid-Abdichtung zwischen der mindestens einen Elektrodenlage und dem elektrolytischen Träger bereitgestellt. Dadurch werden Dichtungsprobleme verhindert oder zumindest verringert.

Weiterhin läßt sich ein enger elektrischer Anschluß zwischen dem elektrolytischen Träger und der mindestens einen Elektrodenlage erreichen; dadurch wiederum ist der elektrische Widerstand des hergestellten Elektroden-Elektrolyt-Trägers verringert. Dieser verringerte elektrische Widerstand wiederum kann zu einer Erhöhung des Wirkungsgrads beispielsweise einer Brennstoffzelle führen.

Mittels des erfindungsgemäßen Verfahrens läßt sich beispielsweise eine einzige Elektrodenlage zur Herstellung einer Elektrode aufbringen. Es ist auch möglich, daß mehrere räumlich getrennte Elektrodenlagen zur Herstellung von beabstandeten Elektroden (insbesondere Kathode und Anode) hergestellt werden. Es ist weiterhin auch möglich, daß Elektrodenlagen sukzessive aufeinander aufgetragen werden, um beispielsweise eine Elektrode mit räumlich variierender Porenstruktur herstellen zu können.

Durch das Aufbringen von Elektrolytmaterial auf die mindestens eine offenporöse Elektrodenlage wird eine Infiltrierung der mindestens einen Elektrodenlage mit fließfähigem Elektrolytmaterial ermöglicht. Das Aufbringen kann auf unterschiedliche Arten und Weisen erfolgen, wie beispielsweise Aufsprühen, Aufgießen, Aufwalzen, Druckbeaufschlagung usw.

Ganz besonders vorteilhaft ist es, wenn die mindestens eine Elektrodenlage vor dem Aufbringen des Elektrolytmaterials nicht fixiert wird. Dadurch wird eine Infiltration der mindestens einen Elektrodenlage mit fließfähigem und insbesondere flüssigem Elektrolytmaterial ermöglicht. (Bei aus dem Stand der Technik bekannten Verfahren, bei denen auf eine Polymer-Elektrolyt-Membran eine Elektrodenlage aufgetragen wird, ist es üblicherweise vorgesehen, daß die Elektrodenlage nach dem Auftragen fixiert wird.)

Es ist grundsätzlich möglich, daß Elektrodenmaterial (welches Katalysatormaterial umfaßt) für die mindestens eine Elektrodenlage auf den Träger aufgebracht wird und die entsprechende Elektrodenlage dann so bearbeitet wird, daß diese offenporös wird. Beispielsweise ist es möglich, dem Elektrodenmaterial einen Porenbildner wie Ammoniumhydrogencarbonat zuzumischen und dann nach dem Auftragen der mindestens einen Elektrodenlage über Aktivierung des Porenbildners eine offenporöse Elektrodenlagenstruktur herzustellen.

Ganz besonders vorteilhaft ist es, wenn das Elektrodenmaterial so aufgebracht wird, daß die mindestens eine aufgebrachte Elektrodenlage offenporös ist. Es wird dann direkt mit dem Aufbringungsvorgang eine offenporöse Struktur hergestellt. Eine weitere Bearbeitung ist dann nicht mehr notwendig. (Jedoch kann eine solche weitere Bearbeitung zusätzlich durchgeführt werden, um beispielsweise den Grad der offenen Porosität zu erhöhen.)

Die mindestens eine Elektrodenlage läßt sich offenporös auf einfache Weise herstellen, wenn sie auf den zugeordneten Träger aufgesprüht wird. Dadurch läßt sich über den Auftragungsprozeß eine offene Porosität erreichen.

Sprühverfahren, mittels denen sich offenporöse Strukturen herstellen lassen, sind in den nicht-vorveröffentlichten deutschen Patentanmeldungen Nr. 10 2004 017 161.0 vom 31. März 2004 und 10 2004 017 162.9 vom 31. März 2004 offenbart. Ferner sind Sprühverfahren in der DE 195 09 748 C2 und der DE 101 12 232 A1 offenbart. Auf diese Dokumente wird ausdrücklich Bezug genommen.

Insbesondere wird die mindestens eine Elektrodenlage trocken aufgesprüht. Es werden dazu Pulverpartikel aus einem Pulverpartikelgemisch aufgesprüht. Dadurch läßt sich eine offenporöse Elektrodenlage auf einfache Weise herstellen.

Ganz besonders vorteilhaft ist es, wenn mittels des Elektrolytmaterials ein elektrolytischer Träger für die mindestens eine Elektrodenlage hergestellt wird. Als Elektrolyt wird beispielsweise ein Polymerwerkstoff wie NAFION eingesetzt. Bei fließfähigem Elektrolytmaterial sind die Polymere noch nicht oder noch nicht vollständig vernetzt. Dadurch weist das Elektrolytmaterial eine entsprechende niedrige Viskosität auf, die das Elektrolytmaterial fließfähig macht; insbesondere liegt das Elektrolytmaterial in flüssigem Zustand vor. Dadurch kann dann eine offenporöse Elektrodenlage mit Elektrolytmaterial infiltriert werden. Nach der Vernetzung des Polymers ist ein elektrolytischer Träger gebildet, welcher die mindestens eine Elektrodenlage hält. Der elektrolytische Träger ist selber eine Elektrolyt, wobei die mindestens eine Elektrodenlage elektrochemisch aktiv ist. Zwischen einem Katalysatormaterial der mindestens einen Elektrodenlage und dem Elektrolyten ist dabei eine optimierte Anbindung erreicht, da Katalysatormaterial und Elektrolytmaterial über das erfindungsgemäße Herstellungsverfahren in einem großen (inneren) Oberflächenbereich in Kontakt stehen.

Insbesondere wird mittels des Elektrolytmaterials eine Membran hergestellt, an welcher die mindestens eine Elektrodenlage angeordnet ist. Die Membran stellt einen mechanischen Träger für die Elektrodenlage dar, wobei sie auch als Elektrolyt dient.

Insbesondere wird die Elektroden-Elektrolyt-Struktur als Membran mit integrierter mindestens einer Elektrode hergestellt. Die Elektrode ist in die Membran eingebettet. Dadurch sind Dichtigkeitsprobleme vermieden bzw. stark verringert und der elektrische Widerstand der Elektroden-Elektrolyt-Struktur ist minimiert.

Bei einer Ausführungsform wird das Elektrolytmaterial auf den Träger und die mindestens eine Elektrodenlage in fließfähiger Form aufgetragen. Es bildet sich dadurch eine Elektrolytmaterialansammlung auf dem Träger oberhalb der Elektrodenlage und außerhalb der Elektrodenlage. Dadurch läßt sich eine elektrolytischer Träger für die mindestens eine Elektrodenlage herstellen. Weiterhin läßt sich die mindestens eine offenporöse Elektrodenlage mit Elektrolytmaterial infiltrieren, um für eine gute Katalysator-Elektrolyt-Anbindung zu sorgen.

Insbesondere wird flüssiges Elektrolytmaterial aufgetragen. Das Elektrolytmaterial wird so behandelt (beispielsweise mit einem Lösungsmittel, oder sofern möglich, erhitzt), daß es in flüssiger Form vorliegt. Mit dem flüssigen Elektrolytmaterial wird dann die mindestens eine Elektrodenlage beaufschlagt. Von den Beaufschlagungsoberflächen der mindestens einen Elektrodenlage her kann dann flüssiges Elektrolytmaterial die mindestens eine Elektrodenlage infiltrieren.

Bei einer fertigungstechnisch einfachen Ausführungsform wird fließfähiges Elektrolytmaterial aus einem Vorrat durch Gießen aufgebracht. Das flüssige Elektrolytmaterial wird aus dem Vorrat auf die mindestens eine Elektrodenlage und den Träger gegossen, um dort eine Ansammlung an Elektrolytmaterial zu bilden.

Ganz besonders vorteilhaft ist es, wenn die Elektroden-Elektrolyt-Struktur mit im wesentlichen gleichmäßiger Dicke hergestellt wird. Es läßt sich dadurch eine Elektroden-Elektrolyt-Struktur mit definierten Eigenschaften herstellen.

Insbesondere wird das Elektrolytmaterial so aufgetragen und/oder nach dem Auftragen so bearbeitet, daß die hergestellte Elektroden-Elektrolyt-Struktur eine gleichmäßige Dicke aufweist. Das Elektrolytmaterial kann beispielsweise so gesteuert werden, daß die Elektrolytmaterialansammlung eine gleichmäßige Dicke aufweist. Es ist beispielsweise auch möglich, daß der mindestens eine Träger mit der mindestens einen Elektrodenlage in einer Form angeordnet ist, welche dafür sorgt, daß die Dicke gleichmäßig wird. Es ist auch möglich, daß nach dem Auftragen (und insbesondere vor der Vernetzung eines Polymer-Elektrolytmaterials) eine solche Bearbeitung erfolgt, daß die hergestellte Elektroden-Elektrolyt-Struktur eine gleichmäßige Dicke aufweist.

Bei der entsprechenden Bearbeitung handelt es sich insbesondere um eine mechanische Bearbeitung. Beispielsweise wird aufgetragenes Elektrolytmaterial gerakelt; dazu wird beispielsweise Elektrolytmaterial abgezogen, um eine gleichmäßige Dicke zu erhalten.

Es ist beispielsweise auch möglich, daß aufgetragenes Elektrolytmaterial gewalzt wird. Insbesondere ist einer Walze ein Gegenelement zugeordnet.

Bei einer Variante einer Ausführungsform wird aufgetragenes Elektrolytmaterial kalandriert, das heißt zwischen zwei gegenläufig bewegten Walzen wird eine Elektroden-Elektrolyt-Struktur hergestellt. (Die eine Walze kann dabei als Gegenelement für die andere Walze angesehen werden.)

Mindestens in einem Zwischenstadium der Elektroden-Elektrolyt-Struktur ist die mindestens eine Elektrodenlage zwischen dem zugeordneten Träger für die mindestens eine Elektrodenlage und einer Elektrolytmaterialansammlung angeordnet. Durch den Träger für die mindestens eine Elektrodenlage ist diese zu dem Träger hin abgedeckt. Über nicht abgedeckte Oberflächen der mindestens einen Elektrodenlage läßt sich eine Elektrolytmaterialinfiltrierung durchführen. Über den Träger für die mindestens eine Elektrodenlage wird die Elektrodenlage während der Herstellung des elektrolytischen Träger mechanisch fixiert.

Beispielsweise ist mindestens in einem Zwischenstadium der Herstellung der Elektroden-Elektrolyt-Struktur die mindestens eine Elektrodenlage zwischen dem zugeordneten Träger für die mindestens eine Elektrodenlage und einem aus dem Elektrolytmaterial hergestellten elektrolytischen Träger angeordnet.

Es ist insbesondere vorgesehen, daß der Träger für die mindestens eine Elektrodenlage und die mindestens eine Elektrodenlage getrennt werden. Der Träger dient im wesentlichen dazu, die jeweilige Elektrodenlage zu halten, damit eine Elektrolytmaterialinfiltrierung möglich ist. Es läßt sich dadurch die mindestens eine Elektrodenlage in Elektrolytmaterial einbetten, so daß die mindestens eine Elektrodenlage von Elektrolytmaterial umschlossen ist. Dadurch wiederum läßt sich eine elektrolytischer Träger herstellen, welcher die mindestens eine Elektrodenlage umgibt und insbesondere umschließt. Durch Trennung des Trägers wird eine elektrochemisch aktive äußere Oberfläche, das heißt Elektrodenoberfläche für die Elektroden-Elektrolyt-Struktur bereitgestellt.

Insbesondere wird der Träger für die mindestens eine Elektrodenlage und/oder die Kombination der mindestens einen Elektrodenlage und des hergestellten elektrolytischen Trägers zur Trennung der Elektroden-Elektrolyt-Struktur vom Träger für die mindestens eine Elektrodenlage abgezogen. Dadurch läßt sich auf einfache Weise eine mechanische Trennung zwischen dem Träger und der hergestellten Elektroden-Elektrolyt-Struktur erreichen.

Beispielsweise ist der Träger ein Verbrauchsteil wie beispielsweise eine Folie. Nach Herstellung der Elektroden-Elektrolyt-Struktur wird der Träger abgetrennt.

Beispielsweise wird ein flexibler Träger wie beispielsweise eine Folie verwendet. Dadurch läßt sich das Abziehen des Trägers von der hergestellten Elektroden-Elektrolyt-Struktur vereinfachen.

Es ist auch möglich, daß ein wiederverwendbarer Träger bereitgestellt wird. Beispielsweise wird als Träger mindestens eine rotierende oder drehbare Walze verwendet. Auf einer solchen Walze läßt sich mindestens eine Elektrodenlage auftragen. Über eine Drehung der Walze kann dabei einerseits eine zusammenhänge Elektrodenlage mit einer Längserstreckung hergestellt werden. Eine hergestellte Elektrodenlage läßt sich weiterhin weiter transportieren und insbesondere in einen Beaufschlagungsbereich für fließfähiges Elektrolytmaterial transportieren. Weiterhin ist es auch im Zusammenhang mit einem zugeordneten Gegenelement möglich, eine Elektroden-Elektrolyt-Struktur einer definierten Dicke herzustellen; diese Dicke ist durch den Abstand zwischen der mindestens einen Walze und dem zugeordneten Gegenelement bestimmt.

Günstig ist es, wenn an einem ersten Bereich eine Elektrodenlage auf der Walze hergestellt wird und an einem zweiten Bereich die Beaufschlagung mit fließfähigem Elektrolytmaterial erfolgt, wobei die Walze von dem ersten Bereich in den zweiten Bereich gedreht wird. Dadurch lassen sich Elektroden-Elektrolyt-Strukturen auf einfache Weise in einer kompakten Vorrichtung herstellen. Es lassen sich dabei solche Strukturen zeitsparend herstellen, da beispielsweise bezogen auf eine Walzenumdrehung mehrere Elektrodenlagen auf der Walze hergestellt werden können.

Günstig ist es, wenn an einem dritten Bereich eine Trennung der Elektroden-Elektrolyt-Struktur von der mindestens einen Walze erfolgt. Es erfolgt eine Ablösung der mindestens einen Elektrodenlage, welche durch einen mittels des fließfähigem Elektrolytmaterials hergestellten elektrolytischen Träger gehalten ist. Um eine sichere Ablösung der Elektroden-Elektrolyt-Struktur zu erreichen, kann eine Vorrichtung und ein Verfahren zum thermischen Aufwalzen vorgesehen sein, wie es in der DE 102 43 046 A1 beschrieben ist, auf die ausdrücklich Bezug genommen wird.

Günstig ist es, wenn eine erste Walze und eine beabstandete zweite Walze verwendet werden, wobei die Walzen gegenläufig rotieren oder gegenläufig drehbar sind. Die beiden Walzen stellen dann relativ zueinander jeweils Gegenelemente dar. Der Abstand der Walzen bestimmt die Dicke der hergestellten Elektroden-Elektrolyt-Struktur; über Einstellung des Abstands läßt sich die Dicke einstellen. Es lassen sich ferner, wenn notwendig, Elektroden-Elektrolyt-Strukturen herstellen, welche auf gegenüberliegenden Seiten mit Elektrodenlagen versehen sind.

Insbesondere wird dabei die Dicke der Elektroden-Elektrolyt-Struktur durch den Abstand der ersten Walze und der zweiten Walze bestimmt.

Es ist dabei günstig, wenn fließfähiges Elektrolytmaterial einem Zwischenbereich zwischen der ersten Walze und der zweiten Walze zugeführt wird. Es läßt sich in diesem Zwischenbereich dann eine Elektrolytmaterialansammlung ausbilden, über welche eine Elektrodenlage mit fließfähigem Elektrolytmaterial beaufschlagbar ist, um für eine Infiltrierung zu sorgen. Weiterhin läßt sich eine Elektroden-Elektrolyt-Struktur gleichmäßiger Dicke herstellen.

Es kann vorgesehen sein, daß mindestens eine erste Elektrode und eine beabstandete zweite Elektrode hergestellt werden, wobei zwischen der ersten Elektrode und der zweiten Elektrode Elektrolytmaterial angeordnet ist. Es ist läßt sich dadurch eine Elektroden-Elektrolyt-Struktur herstellen, welche an gegenüberliegenden Seiten Elektroden mit äußeren Oberflächen aufweist. Dadurch läßt sich beispielsweise eine Anoden-Elektrolyt-Kathoden-Einrichtung herstellen.

Der Erfindung liegt ferner die Aufgabe zugrunde, eine Elektroden-Elektrolyt-Struktur bereitzustellen, welche eine optimierte Katalysator-Elektrolyt-Anbindung aufweist.

Diese Aufgabe wird erfindungsgemäß dadurch gelöst, daß das erfindungsgemäße Herstellungsverfahren durchgeführt wird.

Erfindungsgemäß wird eine Elektroden-Elektrolyt-Struktur bereitgestellt, welche mindestens eine erste Elektrodenlage und einen elektrolytischen Träger aufweist, wobei in der mindestens einen Elektrodenlage Elektrolytmaterial angeordnet ist, wobei die Konzentration des Elektrolytmaterials zum elektrolytischen Träger hin im wesentlichen zunimmt.

Durch die Infiltrierung der offenporösen Elektrodenlage von den freien äußeren Oberflächen her (das heißt von den Oberflächen her, die nicht durch den Träger abgedeckt sind und die mit fließfähigem Elektrolytmaterial versorgt werden), kann sich bezogen auf den entsprechenden Querschnitt eine Elektrolytmaterialverteilung in der mindestens einen Elektrodenlage einstellen, welche zum elektrolytischen Träger hin im wesentlichen zunimmt.

Durch die erfindungsgemäße Lösung läßt sich eine gute Katalysator-Elektrolyt-Anbindung erreichen und damit läßt sich ein hoher elektrochemischer Wirkungsgrad der entsprechenden Elektroden-Elektrolyt-Struktur erreichen.

Günstig ist es, wenn die mindestens eine Elektrodenlage seitlich an den elektrolytischen Träger anliegt. Insbesondere erfolgt auch während des Herstellungsverfahrens eine seitliche Infiltration von fließfähigem Elektrolytmaterial.

Dadurch erfolgt eine seitliche Abdichtung der Elektrodenlage über Elektrolytmaterial. Dadurch muß nicht für eine zusätzliche Abdichtung zwischen einer Elektrode und dem elektrolytischen Träger gesorgt werden. Weiterhin erhält man dadurch einen minimierten elektrischen Widerstand für die entsprechende Elektroden-Elektrolyt-Struktur. Aus dem gleichen Grund ist es günstig, wenn die mindestens eine Elektrodenlage seitlich in den elektrolytischen Träger eingebettet ist bzw. die mindestens eine Elektrodenlage an mindestens drei Seiten von dem elektrolytischen Träger umgeben ist.

Ganz besonders vorteilhaft ist es, wenn die mindestens eine Elektrodenlage von dem elektrolytischen Träger bis auf eine Seite umschlossen ist. Die "offene" Seite bildet die äußere Oberfläche der Elektroden-Elektrolyt-Struktur, das heißt bildet die äußere Elektrodenoberfläche.

Die nachfolgende Beschreibung bevorzugter Ausführungsformen dient im Zusammenhang mit der Zeichnung der näheren Erläuterung der Erfindung. Es zeigen:
- Figuren 1(a), 1(b), 1(c), 1(d): schematisch Zwischenschritte bei einem ersten Ausführungsbeispiel eines erfindungsgemäßen Verfahrens zur Herstellung einer Elektroden-Elektrolyt-Struktur;
- Figur 2: eine schematische Schnittansicht eines Ausführungsbeispiels einer erfindungsgemäß hergestellten Elektroden-Elektrolyt-Struktur;
- Figur 3: schematisch ein Beispiel eines räumlichen Verlaufs der Elektrolytkonzentration in einer Elektrodenlage bei einer Elektroden-Elektrolyt-Struktur, welche gemäß dem erfindungsgemäßen Verfahren hergestellt wurde; und
- Figur 4: schematisch verschiedene Verfahrensschritte bei einem zweiten Ausführungsbeispiel eines erfindungsgemäßen Verfahrens zur Herstellung einer Elektroden-Elektrolyt-Struktur.

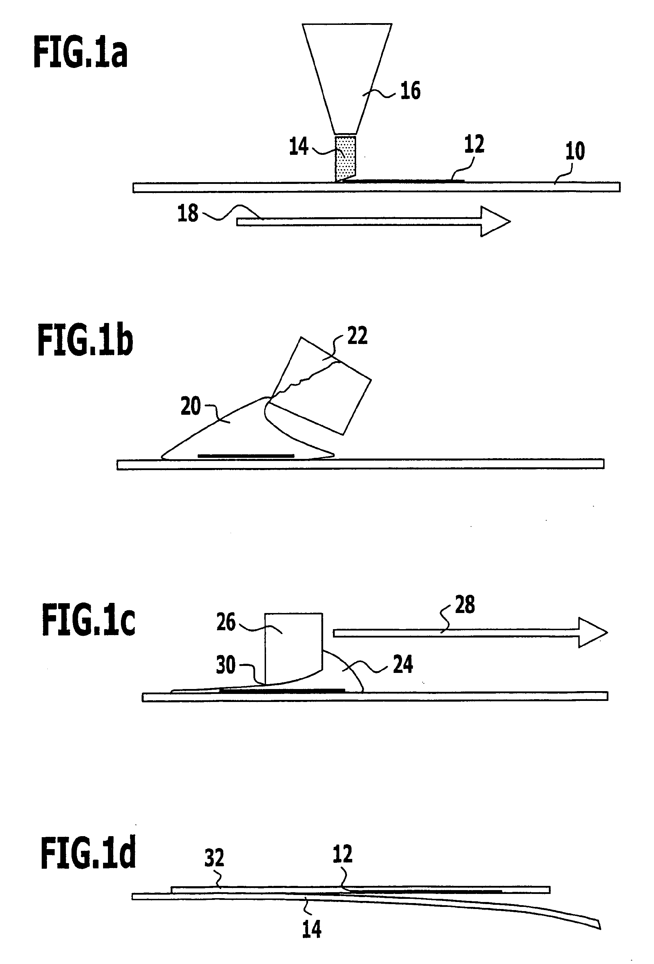

Bei einem ersten Ausführungsbeispiel eines erfindungsgemäßen Verfahrens zur Herstellung einer Elektroden-Elektrolyt-Struktur, von welchem in den Figuren 1(a) bis 1(d) schematisch Zwischenschritte dargestellt sind, wird auf einen Träger 10 eine Elektrodenlage 12 aufgebracht. Der Träger 10 hält die Elektrodenlage 12 während der Herstellung der Elektroden-Elektrolyt-Struktur.

Die Elektrodenlage 12 bildet in der fertig hergestellten Elektroden-Elektrolyt-Struktur eine Elektrode, das heißt den elektrochemisch aktiven Bereich (reaktiven Bereich) der Elektroden-Elektrolyt-Struktur. Die Elektrodenlage 12 umfaßt einen Katalysator. Als Elektrodenmaterial zur Herstellung der Elektrodenlage 12 wird ganz oder teilweise ein Katalysatormaterial wie Platin eingesetzt.

Beispielsweise weist die Elektrodenlage 12 eine Schichtdicke von ca. 20 µm auf.

Die Elektrodenlage 12 wird beispielsweise mittels Aufsprühen eines Elektrodenmaterials 14 auf den Träger 10 hergestellt. In Figur 1(a) ist dazu schematisch eine Sprühdüse 16 angedeutet. Das Elektrodenmaterial 14 ist insbesondere eine Pulvermischung, die trocken auf den Träger 10 aufgesprüht wird.

Pulverpartikel-Aufbringverfahren und Aufbringvorrichtungen für Pulverpartikel und insbesondere Sprühverfahren sind in der nicht-vorveröffentlichten deutschen Patentanmeldungen Nr. 10 2004 017 161.0 vom 31. März 2004 und 10 2004 017 162.9 vom 31. März 2004 offenbart. Ferner sind Sprühverfahren in der DE 195 09 758 C2 und in der DE 101 12 232 A1 offenbart.

Beispielsweise ist die Sprühdüse 16 stationär angeordnet und der Träger 10 ist in einer Richtung 18 relativ zu der Sprühdüse 16 beweglich. Während des Sprühvorgangs wird der Träger 10 in der Richtung 18 bewegt und dadurch die Elektrodenlage 12 hergestellt.

Der Träger 10 ist insbesondere flexibel und beispielsweise durch eine Folie gebildet.

Auf den Träger 10 mit der Elektrodenlage 12 wird nach Herstellung der Elektrodenlage 12, ohne daß diese fixiert wurde, fließfähiges Elektrolytmaterial 20 aufgetragen. Insbesondere wird flüssiges Elektrolytmaterial 20 aus einem Vorrat 22 (beispielsweise einem Gießgefäß) auf den Träger 10 so aufgegossen, daß flüssiges Elektrolytmaterial 20 auf der Elektrodenlage 12 liegt und auf dem Träger 10 außerhalb der Elektrodenlage 12 liegt und so eine Elektrolytmaterialansammlung auf dem Träger 10 und der Elektrodenlage 12 gebildet wird.

Als Elektrolytmaterial wird ein Polymermaterial wie beispielsweise NAFION eingesetzt (NAFION ist eine eingetragene Marke der E.I. du Pont de Nemour & Co., Wilmington, USA). Elektrolytmaterial wird beispielsweise mittels Lösungsmittel verflüssigt, wobei eine zähe Flüssigkeit gebildet wird, welche gießbar ist.

Während des Aufbringens ist das Elektrolytmaterial insbesondere noch nicht vernetzt oder zumindest nicht vollständig vernetzt.

Nach dem Schritt des Auftragens des Elektrolytmaterials 20 (in fließfähiger Form) auf den Träger 10 und die Elektrodenlage 12 (wie in Figur 1(b) gezeigt) wird die Elektrolytmaterialansammlung 24 beispielsweise über einen Rakel 26 glattgezogen. Der Rakel 26 wird dazu in einer Richtung 28 über dem Träger 10 bewegt. Die Richtung 28 ist dabei im wesentlichen parallel zur Richtung 18. Der Abstand einer Ziehkante 30 des Rakels 26 zu dem Träger 10 definiert die Dicke der hergestellten Elektroden-Elektrolyt-Struktur. Durch den Rakel 26 wird eine Elektroden-Elektrolyt-Struktur mit gleichmäßiger Dicke hergestellt (vgl. Figuren 1(c) und 1(d)).

Durch das Aufsprühen der Elektrodenlage 12 weist diese eine offene Porosität auf. Alternativ oder zusätzlich kann das Elektrodenmaterial zur Herstellung der Elektrodenlage 12 Porenbildner umfassen, um eine offene Porosität herzustellen bzw. zu vergrößern.

Das fließfähige Elektrolytmaterial 20 wird auf die offenporöse Elektrodenlage 12 aufgetragen. Dadurch kann fließfähiges und insbesondere flüssiges Elektrolytmaterial 20 in die Elektrodenlage 12 hineinfließen. Es läßt sich dadurch die Elektrodenlage 12 mit Elektrolytmaterial infiltrieren. Dadurch wiederum ist die elektrische Anbindung von Katalysatormaterial der Elektrodenlage 12 an Elektrolytmaterial verbessert.

Durch das Glattziehen mit dem Rakel 26 entsteht ein elektrolytischer Träger 32 (Figur 1(d)), an dem die Elektrodenlage 12 angeordnet ist, wobei die Elektrodenlage 12 in den elektrolytischen Träger 32 integriert ist und in der Elektrodenlage 12 eine verhältnismäßig hohe Konzentration an Elektrolytmaterial vorliegt. Dadurch wird eine "dreidimensionale" Anbindung zwischen der Elektrodenlage 12 und dem elektrolytischen Träger 32 erreicht. (Im Vergleichsfall des aus dem Stand der Technik bekannten Aufbringens einer Elektrodenlage auf eine elektrolytische Membran mit mindestens näherungsweise glatter zweidimensionaler Oberfläche wird nur eine im wesentlichen zweidimensionale Anbindung erreicht.).

Der elektrolytische Träger 32 wird insbesondere als Membran hergestellt beispielsweise mit einer Dicke, die im Größenbereich zwischen 20 µm und 180 µm liegt.

Nach dem Abziehen der Elektrolytmaterialansammlung 24 erfolgt beispielsweise eine Abdampfphase für Lösungsmittel.

Nach der Aushärtung des Elektrolytmaterials wird der Träger 10 von dem elektrolytischen Träger 32 mit der integrierten Elektrodenlage 12 getrennt und insbesondere abgezogen (Figur 1(d)).

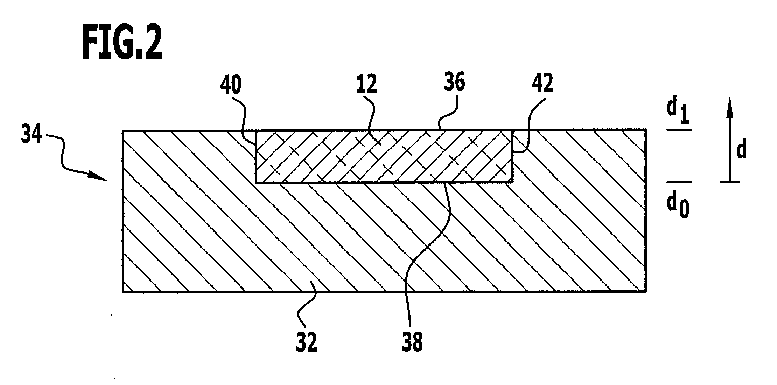

Man erhält dadurch eine Elektroden-Elektrolyt-Struktur, welche in Figur 2 schematisch gezeigt und mit 34 bezeichnet ist. Diese umfaßt den elektrolytischen Träger 32 und die Elektrodenlage 12 als elektrochemisch aktive Schicht (Reaktionsschicht).

Die Elektrodenlage 12 weist eine äußere Oberfläche 36 auf. Sie weist ferner eine der äußeren Oberfläche 36 gegenüberliegende innere Oberfläche 38 auf, über welche bei der Herstellung Elektrolytmaterial 20 in die Elektrodenlage 12 infiltriert wurde (vgl. Figur 1(b)). Die innere Oberfläche 38 ist dem elektrolytischen Träger 32 zugewandt angeordnet.

Seitliche (innere) Oberflächen 40, 42 der Elektrodenlage 12 sind ebenfalls dem elektrolytischen Träger 32 zugewandt.

Dadurch ist die Elektrodenlage 12 mindestens dreiseitig von Elektrolytmaterial umgeben und dadurch auch von Elektrolytmaterial umschlossen.

Wenn bei der Herstellung auch die weiteren Querseiten der Elektrodenlage 12 (welche in der Figur 2 nicht sichtbar sind) an Elektrolytmaterial liegen, dann ist die Elektrodenlage 12 bis auf ihre äußere Oberfläche 36 von Elektrolytmaterial umschlossen und entsprechend in den elektrolytischen Träger 32 eingebettet.

Dadurch ergibt sich eine gute Fluidabdichtung der Elektrodenlage 12 bezüglich des elektrolytischen Trägers 32. Ferner ist durch die gute Anbindung des Elektrolytmaterials an die Elektrodenlage 12 der elektrische Widerstand der Elektroden-Elektrolyt-Struktur 34 verhältnismäßig klein.

Bei der Herstellung der Elektroden-Elektrolyt-Struktur 34 kann flüssiges Elektrolytmaterial auch über die Seiten 40, 42 die Elektrodenlage 12 infiltrieren und dadurch die Anbindung an den Elektrolyten weiter verbessern.

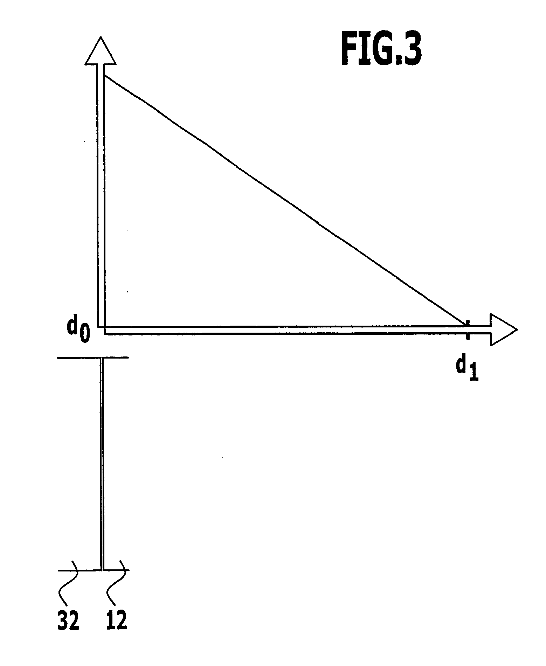

Bei der Herstellung der Elektroden-Elektrolyt-Struktur 34 deckt der Träger die äußere Oberfläche 36 ab. Von der inneren Oberfläche 38 und in geringerem Maße von den seitlichen Oberflächen 40, 42 (da diese eine kleinere Fläche aufweisen) wird die Elektrodenlage 12 mit Elektrolytmaterial infiltriert. In einer Dickenrichtung d der Elektrodenlage 12, welche senkrecht zwischen der inneren Oberfläche 38 und der äußeren Oberfläche 36 verläuft, nimmt, bezogen auf die Querschnittsfläche senkrecht zur Richtung d, die Konzentration an Elektrolytmaterial ausgehend von der inneren Oberfläche 38 ab. Dies ist schematisch in Figur 3 gezeigt: Bei d₀, das heißt an der inneren Oberfläche 38, ist die Elektrolytmaterialkonzentration in der Elektrodenlage 12 am größten. Im Abstand d₁ in der Richtung d, wobei (d₁ - d₀) die Dicke der Elektrodenlage 12 ist, ist die Konzentration an Elektrolytmaterial am geringsten.

Bezogen auf die äußere Oberfläche 36 nimmt die Elektrolytmaterialkonzentration in Richtung der inneren Oberfläche 38 zum elektrolytischen Träger 32 hin zu.

Der Verlauf der Elektrolytmaterialkonzentration über dem Abstand d muß nicht linear erfolgen und auch nicht monoton erfolgen. Die Zunahme der Konzentration in Richtung der inneren Oberfläche 38 bzw. Abnahme der Konzentration in Richtung äußerer Oberfläche 36 ist als Tendenz zu verstehen.

Es ist dabei auch grundsätzlich möglich, daß eine Elektrodenlage 12 aufgesprüht wird, deren Porosität räumlich variiert und insbesondere in der Richtung d variiert. Über eine entsprechende Einstellung der räumlichen Variation der Porenverteilung läßt sich auch die Konzentrationsverteilung der Elektrolytmaterials in der Elektrodenlage 12 einstellen.

Bei dem erfindungsgemäßen Verfahren wird die elektrochemisch aktive Schicht (das heißt die Elektrodenlage 12) nicht auf eine fertig hergestellte elektrolytische Membran aufgebracht, sondern der Elektrolyt wird auf den Träger 10 und die Elektrodenlage 12 aufgetragen, wobei das Elektrolytmaterial fließfähig und insbesondere flüssig ist. Die Elektrodenlage 12 ist beim Aufbringen des Elektrolytmaterials nicht fixiert. Elektrolytmaterial kann in diesem Stadium in die Elektrodenlage 12 eindringen. Zum Zeitpunkt des Auftragens des Elektrolytmaterials ist dieses noch unvernetzt bzw. nicht vollständig vernetzt. Nach der Vernetzung ist dann eine Membran mit integrierter Elektrodenlage 12 hergestellt, wobei eine Art dreidimensionaler Anbindung zwischen dem Elektrolyten und der Elektrode (und insbesondere deren Katalysatormaterial) vorliegt.

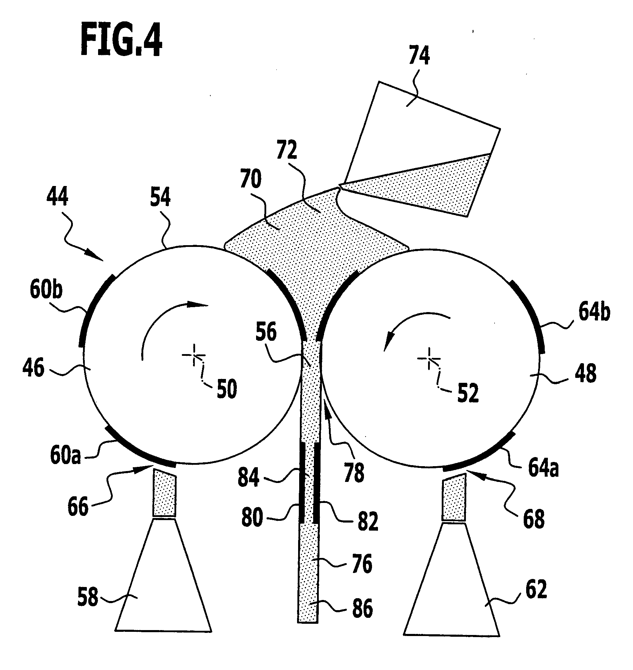

Bei einem zweiten Ausführungsbeispiel des erfindungsgemäßen Herstellungsverfahrens ist, wie in Figur 4 gezeigt, ein Kalander 44 mit einer ersten Walze 46 und einer zweiten Walze 48 vorgesehen. Die erste Walze 46 ist um eine Drehachse 50 rotierbar und die zweite Walze ist um eine Drehachse 52 rotierbar, wobei die beiden Walzen 46, 48 in Gegenrichtung gedreht werden.

Die beiden Walzen 46, 48 sind im wesentlichen gleich ausgebildet und weisen eine jeweilige zylindrische Oberfläche 54 auf. Die Drehachsen 50, 52 liegen parallel. Die beiden Walzen 46 und 48 sind beabstandet zueinander, das heißt der Abstand der beiden Drehachsen 50 und 52 ist größer als die Summe der Radien der beiden Walzen 46 und 48. Dadurch ist zwischen den beiden Walzen 46 und 48 ein Spalt 56 gebildet.

Der ersten Walze 46 ist (mindestens) eine erste Sprühdüse 58 zugeordnet, über die sich Elektrodenlagen 60a, 60b usw. auf der Oberfläche 54 der ersten Walze 46 aufbringen lassen.

Der zweiten Walze 48 ist entsprechend (mindestens) eine zweite Sprühdüse 62 zugeordnet, durch die sich Elektrodenlagen 64a, 64b usw. auf der Oberfläche 54 der zweiten Walze 48 aufbringen lassen.

Die Elektroden-Elektrolyt-Struktur-Herstellung erfolgt gemäß dem zweiten Ausführungsbeispiel wie folgt:

Auf die erste Walze 46 und auf die zweite Walze 48 werden zeitlich synchron jeweilige Elektrodenlagen 60a, 64a aufgebracht.

Es können dabei auf eine Walze Elektrodenlagen zeitlich beabstandet aufgebracht werden. Dadurch sind die Elektrodenlagen (beispielsweise die Elektrodenlagen 60a und 60b auf der ersten Walze 46 und die Elektrodenlagen 64a und 64b auf der zweiten Walze 48) auf den jeweiligen Oberflächen der jeweiligen Walzen 46 und 48 beabstandet.

Die Walzen 46, 48 rotieren vorzugsweise mit konstanter Drehgeschwindigkeit. Die Walzen 46, 48 bilden den Träger für die Elektrodenlagen 60a, 60b bzw. 64a, 64b. Durch die Rotation der Walzen 46, 48 wird die Relativbewegung zwischen dem Träger 46 bzw. 48 und den Sprühdüsen 58 bzw. 62 bewirkt. Dadurch wiederum läßt sich eine gleichmäßige Elektrodenschicht aufsprühen.

Ansonsten erfolgt die Herstellung der Elektrodenlagen wie oben im Zusammenhang mit dem ersten Ausführungsbeispiel beschrieben.

Die Elektrodenlagen 60a, 60b bzw. 64a, 64b werden an einem jeweiligen ersten Bereich 66, 68 bezogen auf die Sprühdüsen 58, 62 hergestellt, wobei sie über die Walzen 46 und 48 aus diesen Bereichen 66 und 68 heraus transportiert werden.

In einem zweiten Bereich 70, welcher zwischen den Walzen 46 und 48 oberhalb des Spalts 56 liegt, erfolgt eine Beaufschlagung der Walzen 46 und 48 mit Elektrolytmaterial 72 aus einem Vorrat 74. Das Elektrolytmaterial 72 ist dabei fließfähig und wird beispielsweise in flüssiger Form von dem Vorrat 74 in den zweiten Bereich 70 gegossen. Insbesondere liegt, wenn es sich bei dem Elektrolytmaterial 72 um ein Polymer handelt, noch keine oder höchstens eine nicht vollständige Polymervernetzung vor.

Über den zweiten Bereich 70 werden beide Walzen 46 und 48 mit Elektrolytmaterial 72 versorgt. Die Elektrodenlagen 60a, 64a, 60b, 64b usw. werden dem Bereich 70 synchronisiert zugeführt, das heißt einander zugeordnete Elektrodenlagen (wie beispielsweise die Elektrodenlagen 60a und 64a) werden bezogen auf eine Mittelebene zwischen den Drehachsen 50 und 52 spiegelsymmetrisch zueinander geführt.

Durch die Elektrolytermaterialbeaufschlagung im zweiten Bereich 70 bildet sich über den entsprechenden Elektrodenlagen eine Elektrolytmaterialansammlung. Dadurch kann fließfähiges Elektrolytmaterial von hinten (das heißt von der den Trägern 46, 48 abgewandten Oberfläche her) in die Elektrodenlagen 60a, 64b, 60b, 64b eindringen und damit können die entsprechenden Elektrodenlagen mit Elektrolytmaterial infiltriert werden.

Das Elektrolytmaterial 72 wird dabei durch die beiden Walzen 46, 48 kalandriert und es entsteht eine beispielsweise membranförmige Elektroden-Elektrolyt-Struktur 76, deren Dicke durch den Abstand der beiden Walzen 46 und 48 (das heißt durch die Dicke des Spalts 56) bestimmt ist.

In einem dritten Bereich 78 wird die Elektroden-Elektrolyt-Struktur 76 von den Walzen 46, 48 gelöst, wobei auch die Elektrodenlagen 60a, 64a, 60b, 64b gelöst werden.

Die dabei entstehende Elektroden-Elektrolyt-Struktur 76 weist gegenüberliegende Elektrodenlagen 80, 82 auf. Zwischen diesen elektrochemisch aktiven Schichten (das heißt reaktiven Schichten), liegt eine Elektrolytschicht 84. Das Elektrolytmaterial 84 bildet nach der Vernetzung einen elektrolytischen Träger 86. In diesen elektrolytischen Träger 86 sind die Elektrodenlagen 80, 82 allseitig bis auf eine äußere Oberfläche eingebettet.

Zum Kalandrieren des Elektrolytmaterials auf den entsprechenden Elektrodenlagen 60a, 64a, 60b, 64b usw. kann die Vorrichtung zum thermischen Aufheizen eines Beschichtungsmaterials auf einen Träger sowie das entsprechende

Verfahren eingesetzt werden, welches in der DE 102 43 046 A1 beschrieben ist. Der Träger im Sinne der DE 102 43 046 A1 ist dabei im vorliegenden Fall eine Elektrodenlage und das Beschichtungsmaterial ist das Elektrolytmaterial.

Durch das erfindungsgemäße Verfahren gemäß dem zweiten Ausführungsbeispiel lassen sich auf einfache Weise gegenüberliegende Elektrodenlagen 80, 82 an einem elektrolytischen Träger 86 herstellen.

(Dies ist beispielsweise auch bei einer Variante des Verfahrens gemäß dem ersten Ausführungsbeispiel möglich, indem beispielsweise auf einen ersten Träger 10 eine erste Elektrodenlage aufgebracht wird und auf einen zweiten Träger eine zweite Elektrodenlage aufgebracht wird und die beiden Träger mit einander zugewandten Elektrodenlagen in einem definierten Abstand positioniert werden. Flüssiges Elektrolytmaterial wird dann auf die beiden Elektroden aufgebracht und dabei insbesondere durch den Zwischenraum zwischen den beiden Elektroden durchgepreßt.)

Bei dem Verfahren gemäß dem zweiten Ausführungsbeispiel läßt sich eine Mehrzahl an Elektroden-Elektrolyt-Strukturen zeitminimiert herstellen.

## Patentansprüche

1. Verfahren zur Herstellung einer Elektroden-Elektrolyt-Struktur, bei der mindestens eine offenporöse Elektrodenlage auf mindestens einen Träger aufgebracht wird und Elektrolytmaterial in fließfähiger Form auf die mindestens eine Elektrodenlage aufgebracht wird.

2. Verfahren nach Anspruch 1, **dadurch gekennzeichnet, daß** die mindestens eine Elektrodenlage vor dem Aufbringen des Elektrolytmaterials nicht fixiert wird.

3. Verfahren nach Anspruch 1 oder 2, **dadurch gekennzeichnet, daß** Elektrodenmaterial für die mindestens eine Elektrodenlage so aufgebracht wird, daß die mindestens eine aufgebrachte Elektrodenlage offenporös ist.

4. Verfahren nach einem der vorangehenden Ansprüche, **dadurch gekennzeichnet, daß** die mindestens eine Elektrodenlage auf den zugeordneten Träger aufgesprüht wird.

5. Verfahren nach Anspruch 4, **dadurch gekennzeichnet, daß** die mindestens eine Elektrodenlage trocken aufgesprüht wird.

6. Verfahren nach einem der vorangehenden Ansprüche, **dadurch gekennzeichnet, daß** mittels des Elektrolytmaterials ein elektrolytischer Träger für die mindestens eine Elektrodenlage hergestellt wird.

7. Verfahren nach einem der vorangehenden Ansprüche, **dadurch gekennzeichnet, daß** mittels des Elektrolytmaterials eine Membran hergestellt wird, an welcher die mindestens eine Elektrodenlage angeordnet ist.

8. Verfahren nach einem der vorangehenden Ansprüche, **dadurch gekennzeichnet, daß** die Elektroden-Elektrolyt-Struktur als Membran mit integrierter mindestens einer Elektrode hergestellt wird.

9. Verfahren nach einem der vorangehenden Ansprüche, **dadurch gekennzeichnet, daß** das Elektrolytmaterial auf den Träger und die mindestens eine Elektrodenlage in fließfähiger Form aufgetragen wird.

10. Verfahren nach einem der vorangehenden Ansprüche, **dadurch gekennzeichnet, daß** flüssiges Elektrolytmaterial aufgetragen wird.

11. Verfahren nach einem der vorangehenden Ansprüche, **dadurch gekennzeichnet, daß** fließfähiges Elektrolytmaterial aus einem Vorrat durch Gießen aufgebracht wird.

12. Verfahren nach einem der vorangehenden Ansprüche, **dadurch gekennzeichnet, daß** die Elektroden-Elektrolyt-Struktur mit einer im wesentlichen gleichmäßigen Dicke hergestellt wird.

13. Verfahren nach einem der vorangehenden Ansprüche, **dadurch gekennzeichnet, daß** Elektrolytmaterial so aufgetragen wird und/oder nach dem Auftragen so bearbeitet wird, daß die hergestellte Elektroden-Elektrolyt-Struktur eine gleichmäßige Dicke aufweist.

14. Verfahren nach einem der vorangehenden Ansprüche, **dadurch gekennzeichnet, daß** aufgetragenes Elektrolytmaterial gerakelt wird.

15. Verfahren nach einem der vorangehenden Ansprüche, **dadurch gekennzeichnet, daß** aufgetragenes Elektrolytmaterial gewalzt wird.

16. Verfahren nach einem der vorangehenden Ansprüche, **dadurch gekennzeichnet, daß** aufgetragenes Elektrolytmaterial kalandriert wird.

17. Verfahren nach einem der vorangehenden Ansprüche, **dadurch gekennzeichnet, daß** mindestens in einem Zwischenstadium der Herstellung der Elektroden-Elektrolyt-Struktur die mindestens eine Elektrodenlage zwischen dem zugeordneten Träger für die mindestens eine Elektrodenlage und einer Elektrolytmaterialansammlung angeordnet ist.

18. Verfahren nach einem der vorangehenden Ansprüche, **dadurch gekennzeichnet, daß** mindestens in einem Zwischenstadium der Herstellung der Elektroden-Elektrolyt-Struktur die mindestens eine Elektrodenlage zwischen dem zugeordneten Träger für die mindestens eine Elektrodenlage und einem aus dem Elektrolytmaterial hergestellten elektrolytischen Träger angeordnet ist.

19. Verfahren nach einem der vorangehenden Ansprüche, **dadurch gekennzeichnet, daß** der Träger für die mindestens eine Elektrodenlage und die mindestens eine Elektrodenlage getrennt werden.

20. Verfahren nach Anspruch 19, **dadurch gekennzeichnet, daß** der Träger für die mindestens eine Elektrodenlage und/oder die Kombination der mindestens einen Elektrodenlage und des hergestellten elektrolytischen Trägers zur Trennung der Elektroden-Elektrolyt-Struktur vom Träger für die mindestens eine Elektrodenlage abgezogen wird.

21. Verfahren nach einem der vorangehenden Ansprüche, **dadurch gekennzeichnet, daß** der Träger ein Verbrauchsteil ist.

22. Verfahren nach einem der vorangehenden Ansprüche, **dadurch gekennzeichnet, daß** ein flexibler Träger verwendet wird.

23. Verfahren nach einem der Ansprüche 1 bis 20, **dadurch gekennzeichnet, daß** als Träger mindestens eine rotierende oder drehbare Walze verwendet wird.

24. Verfahren nach Anspruch 23, **dadurch gekennzeichnet, daß** an einem ersten Bereich eine Elektrodenlage auf der Walze hergestellt wird und an einem zweiten Bereich eine Beaufschlagung mit fließfähigem Elektrolytmaterial erfolgt, wobei die Walze von dem ersten Bereich in den zweiten Bereich gedreht wird.

25. Verfahren nach Anspruch 24, **dadurch gekennzeichnet, daß** in einem dritten Bereich eine Trennung der Elektroden-Elektrolyt-Struktur von der mindestens einen Walze erfolgt.

26. Verfahren nach einem der vorangehenden Ansprüche, **dadurch gekennzeichnet, daß** eine erste Walze und eine beabstandete zweite Walze verwendet werden, wobei die Walzen gegenläufig rotieren oder gegenläufig drehbar sind.

27. Verfahren nach Anspruch 26, **dadurch gekennzeichnet, daß** die Dicke der Elektroden-Elektrolyt-Struktur durch den Abstand der ersten Walze und der zweiten Walze bestimmt wird.

28. Verfahren nach Anspruch 26 oder 27, **dadurch gekennzeichnet, daß** fließfähiges Elektrolytmaterial einem Zwischenbereich zwischen der ersten Walze und der zweiten Walze zugeführt wird.

29. Verfahren nach einem der vorangehenden Ansprüche, **dadurch gekennzeichnet, daß** mindestens eine erste Elektrode und eine beabstandete zweite Elektrode hergestellt werden, wobei zwischen der ersten Elektrode und der zweiten Elektrode Elektrolytmaterial angeordnet ist.

30. Elektroden-Elektrolyt-Struktur, welche mindestens eine Elektrode (12; 80, 82) und einen elektrolytischen Träger (32; 86) umfaßt, welche nach dem Verfahren gemäß einem der vorangehenden Ansprüche hergestellt ist.

31. Elektroden-Elektrolyt-Struktur, welche mindestens eine Elektrodenlage (12; 80, 82) und einen elektrolytischen Träger (32; 86) umfaßt, **dadurch gekennzeichnet, daß** in der mindestens einen Elektrodenlage (12; 80, 82) Elektrolytmaterial angeordnet ist, wobei die Konzentration des Elektrolytmaterials zum elektrolytischen Träger (32; 86) hin im wesentlichen zunimmt.

32. Elektroden-Elektrolyt-Struktur nach Anspruch 31, **dadurch gekennzeichnet, daß** die mindestens eine Elektrodenlage (12; 80, 82) seitlich an dem elektrolytischen Träger (32; 86) anliegt.

33. Elektroden-Elektrolyt-Struktur nach Anspruch 32, **dadurch gekennzeichnet, daß** die mindestens eine Elektrodenlage (12; 80, 82) seitlich in den elektrolytischen Träger (32; 86) eingebettet ist.

34. Elektroden-Elektrolyt-Struktur nach einem der Ansprüche 31 bis 33, **dadurch gekennzeichnet, daß** die mindestens eine Elektrodenlage (12; 80, 82) an mindestens drei Seiten (38, 40, 42) von dem elektrolytischen Träger (32; 86) umgeben ist.

35. Elektroden-Elektrolyt-Struktur nach Anspruch 34, **dadurch gekennzeichnet, daß** die mindestens eine Elektrodenlage (12; 80, 82) von dem elektrolytischen Träger (32; 86) bis auf eine Seite (36) umschlossen ist.
